# EUROPEAN PATENT APPLICATION

(11) **EP 2 151 525 A2**
(43) Date of publication of application: **10.02.2010**
(21) Application number: 09382135.3
(22) Date of filing: 05.08.2009
(51) Int. Cl.: E02B 11/02, F16L 1/032

(54) **Device for installing underground irrigation conduits and process for connecting parts of irrigation conduits**

(30) Priority: 05.08.2008 ES 200802338; 27.09.2008 ES 200802747; 31.07.2009 ES 200930336 U
(71) Applicant: Elcoso Cerezuela, Gonzalo, 22200 Sariñena (Huesca) (ES)
(72) Inventor: Elcoso Cerezuela, Gonzalo, 22200 Sariñena (Huesca) (ES)
(74) Representative: Carpintero Lopez, Francisco

(57) **Abstract**

The invention relates to a device for installing underground irrigation conduits and a process for connecting parts in irrigation conduits. The device of the invention incorporates a platform (16), in which there is defined an elongated service passage (17), with dimensions slightly greater than those of the tractor vehicle (36) to which it is fixed, parallel to which platform there is established a longitudinal guide (19) on which the connecting machine (20) for connecting parts in conduits is movable, and which is finished at its rear end in a second flexible guide (39), for feeding the actual apparatus (1) for installing underground irrigation conduits, with the particularity that in correspondence with the front end of the platform there is established an arm (37) on which a reel (38) for supplying the irrigation conduit (23) to be buried in the ground to the connecting machine (20) for connecting parts in conduits is arranged through the corresponding bearings or bushes.

## Description

### Object of the Invention

The invention, as expressed in the title of this specification, relates to an improved apparatus for installing underground irrigation conduits.

More particularly, the object of the invention is focused on an apparatus the purpose of which consists of, in a quick, practical and simple manner, allowing the installation of flexible irrigation conduits, of the type which, generally used in farms, are arranged at a certain distance under the surface of the earth having sections emerging at the surface, every certain space, in which the irrigation mouths or nozzles are coupled, said apparatus having the particularity of incorporating a series of improvements which provide the function for which they are intended with several advantages and innovative features, which will be described in detail below, which involve an outstanding enhancement compared to what is already known in this field.

Said improvements and enhancements are directly related to the effectiveness and greater ease in placing the conduits, furthermore achieving a better treatment thereof, such that they do not experience frictions and their placement requires less effort, therefore it is quicker and simpler.

The invention likewise affects a machining process, intended to procure cutting the mentioned irrigation conduits, for the connection or "embedment" therein of a part, such as a valve, a metal attachment part or another similar part, said new process providing several advantages and innovative features, in addition to others inherent to the organization and arrangement thereof, which will be described in detail below, which involve an outstanding enhancement compared to the systems currently used in the market for the same purpose.

### Background of the Invention

Currently, and as a reference to the state of the art, it must be mentioned that several devices intended, such as the one at hand, to allow and facilitate the installation of underground irrigation conduits, are known. However, although said devices achieve performing the function for which they are intended more or less satisfactorily, they have a series of aspects which can be improved.

Thus, on one hand, known devices have, for the insertion of the conduits, a simple groove or duct through which the conduit in question is gradually introduced. Said operation is performed by simply pushing the conduit so that, by itself, it is gradually correctly placed in the ditch which will have been created by the spike provided in the front part of the device. The mentioned duct furthermore generally has a sinusoid groove imparting a rotational movement to the conduit when the perpendicular sections coupled to the conduit and intended to rise to the surface pass through it. This makes the conduit, when it passes through the duct and rotates forced by the shape of the mentioned groove, experience unwanted frictions which can deteriorate it in a disastrous manner.

The need to create a system which, with the same purpose, allows solving the mentioned drawbacks of conventional systems currently known in the market is therefore evident, this being the objective of the present invention, providing an alternative solution which allows preventing the mentioned frictions of the conduit during its burying operation, it being necessary to indicate that the applicant is not aware of the existence of any other invention having the improved technical, structural and configuration features of the apparatus proposed herein.

In relation to these problems, the fact that this type of device does not include means for the machined connection of parts in said conduits such as a valve, a metal attachment part or another similar part should be emphasized.

### Description of the Invention

The device for installing underground irrigation conduits proposed by the invention fully and satisfactorily solves the aforementioned problems, in the different mentioned aspects, carrying out the process of cutting, connecting and implanting the irrigation conduits continuously, without stops and virtually automatically, since only the participation of an operator in the process of cutting and connecting the pipes is necessary, the rest being carried out with a second operator accompanying the trajectory of the connected polyethylene tube to the grating which arranges it in the subsoil.

To that end, the proposed device is formed from an elongated platform, with a length slightly greater than that of the tractor vehicle to which it is fixed both laterally and frontally, in which platform there are defined a service passage and longitudinal guides through which a cutting and connecting machine for cutting and connecting parts in conduits can slide, being located in the most suitable place at all times, which guides furthermore serve as means for supporting and feeding the conduit to be buried, with its corresponding connections, to the actual installing machine for installing underground irrigation conduits.

More specifically, the actual installing machine consists of a preferably metal support structure, the front part of which has hitching means for its coupling to a tractor vehicle, responsible for pulling it, likewise having at said front part a tip or spike which, like a plow, is driven in the ground and gradually creates a ditch in which the conduit is deposited, which conduit is passed through the mentioned structure through a curved duct.

This structure, which has an approximately quadrangular and planar configuration and which is arranged vertically and perpendicular to the hitch, having means for allowing the introduction of the conduit to be installed already provided with vertical irrigation sections, has the particularity of having a drive chain coupled to a plurality of star bearings, like pinions, facilitating the free sliding of the conduit, making its introduction in the ditch completely friction-free, occurring smoothly and continuously.

It must be mentioned that a series of articulated flat bars have been provided distributed along the chain, which flat bars, in the curved section through which the conduit moves, are lifted pushed by a profile provided in said section for such purpose, such that said flat bars are located laterally on the conduit, accompanying it in the passage of the latter, ensuring its correct sliding and positioning, without frictions of any type and preventing its exit or unwanted movements.

Furthermore, a groove curved at its central part has been provided in the final part of the path of the conduit through the structure, which groove is intended to channel the vertical sections coupled to the conduit and make the latter be suitably placed when the conduit is deposited in the ditch.

On the other hand, it must be mentioned that for the suitable driving of the spike the incorporation of a hydraulic cylinder on the latter has been provided, which hydraulic cylinder, powered by the tractor itself, will provide the necessary force to the apparatus for a correct introduction thereof at the desired depth for each installation.

In relation to the cutting and connecting machine for cutting and connecting parts in the main conduit, as well as the process for using it, such machine comprises the use of a plurality of cylinders, electrically actuated by means of corresponding electrovalves, which incorporate, according to the specific function of each one, different actuation elements, the tube being suitably installed in a rotary machine supporting it and making it move forward automatically, the phases of each connection cycle consisting of the steps detailed below:
- Firstly, by means of an electric command, an electrovalve operating a first cylinder is acted upon, which cylinder incorporates an end clamp which is closed on the polyethylene tube, forming the conduit, and holds it, stopping its forward movement in the machine through which it runs suitably guided.
- A few seconds after the mentioned closing, two other clamps are closed on the tube at the same time, which clamps, operated by their corresponding cylinders, are located on both sides of a central support on which respective parallel blades separated about 25 mm and provided in a head act, which head is in turn actuated by a fourth central cylinder, said blades making respective transverse and parallel cuts in the tube on the mentioned central support when the cutting cycle starts.
- Then, once the cut is made, the central cylinder is removed and the resulting piece of cut tube falls, when the cutting cycle ends.
- The following step involves the separation of the tube segments, for which the lateral cylinders joined at the lower part to the aforementioned holding clamps located, as has been stated, on both sides of the support, move away from one another until the end of travel thereof; a path which will have been previously calculated so that the separation between the cut ends of the tube is sufficient to incorporate therebetween the part to be connected.
- Once the tube segments are separated, the metal part to be connected is placed on the support. This placement may be performed manually or automatically by means of the actuation of a robot, suitably programmed for such purpose.
- Then, the lateral cylinders again move to place them in their original position, whereby the ends of the polyethylene tube are inserted in the ends of the metal part to be connected, which is suitably provided, at the inner part of its ends, with "gills" holding the section of tube which has penetrated therein.
- Finally, the two clamps lateral to the support and the end clamp are opened and separated from the tube by means of the actuation on the corresponding cylinders to which they are associated.

Returning again to the general structure of the device of the invention, it has been provided that in correspondence with the front part of the platform there is established a large reel supplying the tube to be buried, a raisable table, operated by at least one hydraulic cylinder, being located laterally to said element and in correspondence with the front area of the tractor vehicle, in which table there is established a frame for receiving the T-shaped tubes or connections intended to be intercalated every certain distance in the pipe to be buried.

Said table, as a result of the aforementioned cylinder discussed above, and the corresponding hinges, can pivot towards the platform by hydraulic drive, for the purpose of facilitating the extraction of the "Ts" or forks discussed above.

Thus, the reel, provided with the corresponding bushes or bearings, will supply the tube to be buried through the longitudinal guides established in the platform, passing first through the aforementioned cutting machine, such that a user, who will comfortably ride on said platform while the tractor moves at constant speed, will be in charge of handling the cutting and connecting machine for conduits when said vehicle reaches the key points in which said connections are necessary on the ground, such that at the outlet of said machine, the tube with its corresponding connections will move in a rear direction through the longitudinal guide until reaching a second guide, which this time is a curved guide, with a U-shaped section, which directly feeds the apparatus for installing underground irrigation conduits described in invention patent P200802747, the latter carrying out the generation of the corresponding ditch and implantation of the conduit in it.

According to another feature of the invention, it has been provided that the aforementioned machine for installing underground irrigation conduits incorporates in correspondence with its rear end a lance in which two arms are located at the lower part, to which arms a pair of notched disks arranged forming a certain angle between one another, like a wedge, are joined in an articulated manner, through which disks it is possible to cover the furrow again with the conduit already introduced in it, in a completely automatic manner with the earth itself displaced in the process of making said furrow.

It should be indicated that the actual machine for installing underground irrigation conduits may incorporate in it supper area a series of boards or platforms such that in the working situation, the latter are flush with the main platform principal, serving as a support and walkway for the second operator who places the shaft of the sprinklers in correspondence with each "T", without needing to walk on the ground.

Finally, it should be emphasized that the device will be complemented with a GPS by means of which, and by means of the prior introduction therein of the plans of the plot, said device will indicate the cutting points in which the sprinkler-carrying shaft must be placed, by means of issuing an electric command to the automaton controlling the device, after running by means of wheels over the walkway lateral to the tractor.

A device is thus achieved with which the time of implantation of the irrigation conduits in the ground is considerably reduced in a virtually automated manner, without risks for the operators.

### Description of the Drawings

To complement the description which is going to be made below and for the purpose of aiding to better understand the features of the invention according to a preferred practical embodiment thereof, a set of drawings is attached as an integral part of said description in which the following has been depicted with an illustrative and non-limiting character:
Figure 1 shows a rear perspective view of an embodiment of the actual apparatus for installing underground irrigation conduits, in which the main parts and elements that it consists of, as well as the configuration and arrangement thereof are observed.
Figure 2 shows a detailed view of the lower area of the structure, in which, in addition to the final section in which the outlet groove has been provided, and the configuration of the star bearing, the positioning of the articulated flat bars, lifted by the profile in the passage area of the conduit and folded in the rest of the path are observed.
Figure 3 shows a detailed view, similar to the previous one, from a more vertical plane, in which the conduit has been incorporated.
Figure 4 shows a detailed view of the outlet groove.
Figure 5 shows an enlarged view of a detail of the apparatus of the invention, in which the configuration of the articulated flat bars and its form of coupling to the conduit is observed.
Figure 6 shows a perspective view of a water conduit installed in a rotary machine, the elements which it comprises and which are involved in the machining process object of the invention being observed, it having been depicted in this view in its first phase of closing the end clamp.
Figure 7 shows a view similar to the previous one in which the process has been depicted in its phase of cutting the tube.
Figure 8 shows a perspective view of the process in its phase of ending the cutting.
Figure 9 shows the phase of separating the ends of the segmented tube.
Figure 10 shows the phase of placing the part on the support.
Figure 11 shows a perspective view of the tube in its phase of "embedment" or connection of the part to the segmented ends of the tube.
Figure 12 shows the final phase of the process in which the clamps are separated.
Figure 13 shows a side elevational view of a device for installing underground irrigation conduits in which both the actual apparatus for installing conduits and the device for connecting parts in said conduits are integrated.
Figure 14 shows a rear perspective view of the device of the previous figure.
Figure 15 finally shows a detail of the raisable table which is established at the front part of the vehicle, intended to house the parts to be connected along the main conduit.

### Preferred Embodiment of the Invention

In view of the mentioned figures, and according to the adopted numbers, a preferred embodiment of the invention can be observed therein, which embodiment comprise the parts and elements indicated and described in detail below.

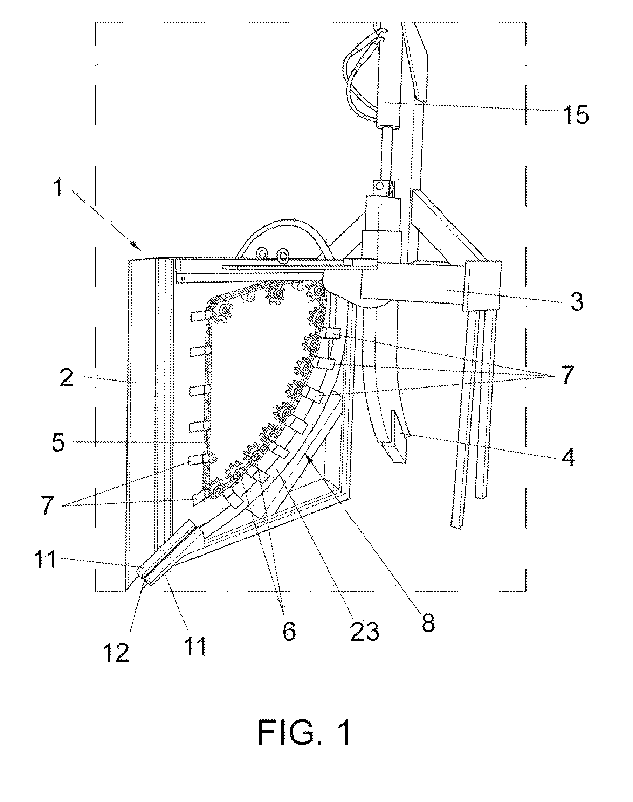

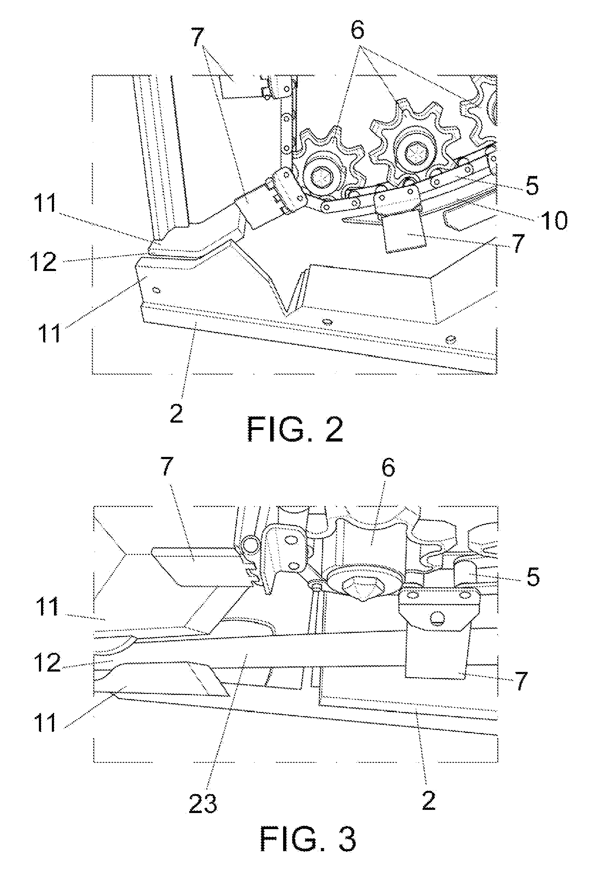

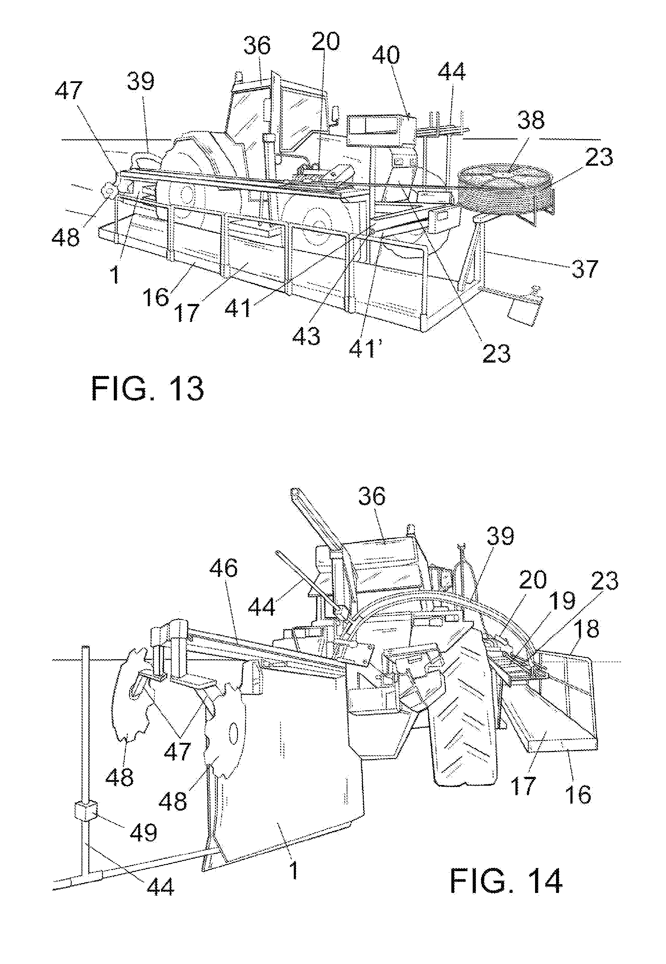

Thus, as can be seen in Figures 13 and 14, an actual apparatus (1) for installing underground irrigation conduits, the one shown in detail in Figures 1 to 5, participates in the device of the invention, which apparatus (1) is formed from a metal support structure (2), the front part of which has hitching means (3) for its coupling to a tractor vehicle, responsible for pulling it, as well as a spike (4).

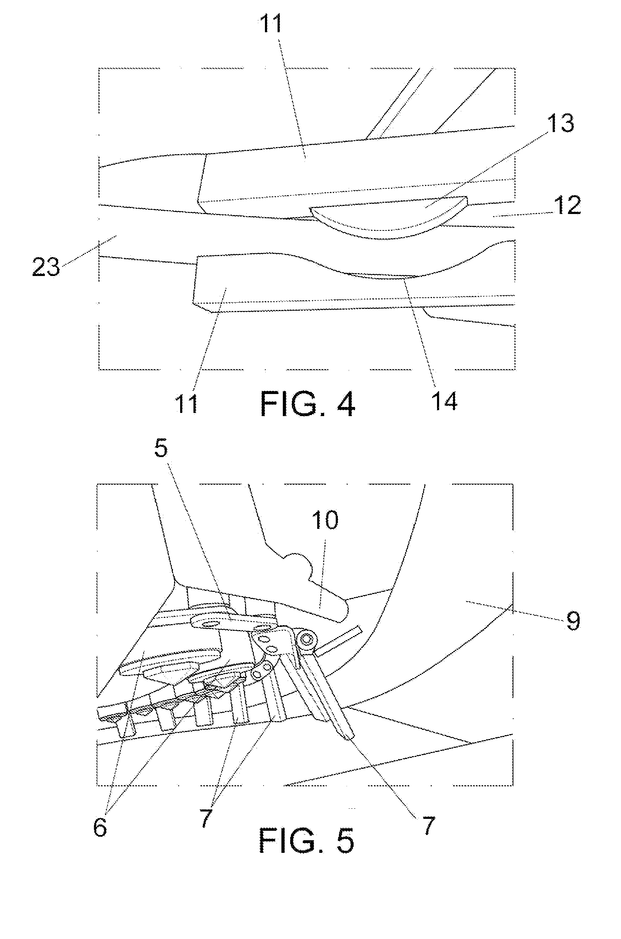

Said structure (2) has a an approximately quadrangular and planar configuration and is arranged vertically and perpendicular to the hitch (3), incorporating, on one of its sides, a chain (5) coupled to a plurality of star bearings (6), like pinions, which enable and guide the movement thereof, a series of articulated flat bars (7) having been provided distributed along said chain (5), which flat bars have an L-shaped profile, as observed in Figure 5.

These flat bars (7), in the curved section (8) of the path of the mentioned chain (5), intended for the passage of the conduit (9), and going from the front upper end, through which the conduit (9) enters, to the rear lower end of the structure (2), through which it exits, are lifted pushed by a profile (10) provided in said section (8) for such purpose, such that said flat bars (7), upon being lifted, are laterally supported on the conduit (23), accompanying it in the passage of the latter through the mentioned curved section (8), ensuring its correct sliding and positioning, without frictions and preventing its exit or unwanted movements.

In the final part of the curved section (8) of the chain (5) covered by the conduit (23), at the rear lower end of the structure (2), and through which the conduit (23) exits, there have been provided respective parallel parts (11), partially separated from one another, such that they determine an outlet groove (12) which is curved in its central part, as a result of the protrusion (13) provided in one of said parts (11) located in correspondence with the recess (14) provided in the other one, said outlet groove (12) being intended to channel the vertical sections which can be coupled to the conduit (23) and make them be suitably placed when the conduit (23) is deposited in the ditch which will have been created by the passage of the spike (4).

In turn, for the suitable driving of said spike (4) the incorporation on the latter of a hydraulic cylinder (15) has been provided, which cylinder, powered by the tractor itself to which the apparatus (1) is coupled, will provide the necessary force thereto for its correct introduction in the ground at the desired depth in each type of installation.

Returning again to Figures 13 and 14, the mentioned apparatus (1) is complemented with a metal platform (16), in which there is defined an elongated service passage (17), accompanied by the corresponding safety rail (18), parallel to which there is defined a longitudinal guide (19) on which a connecting machine (20) for connecting parts in conduits can move.

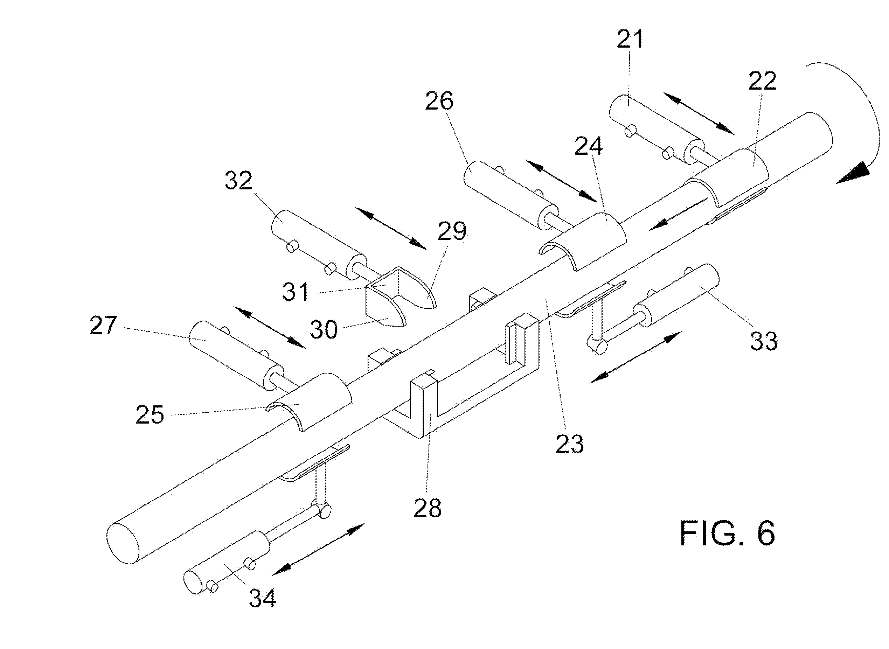

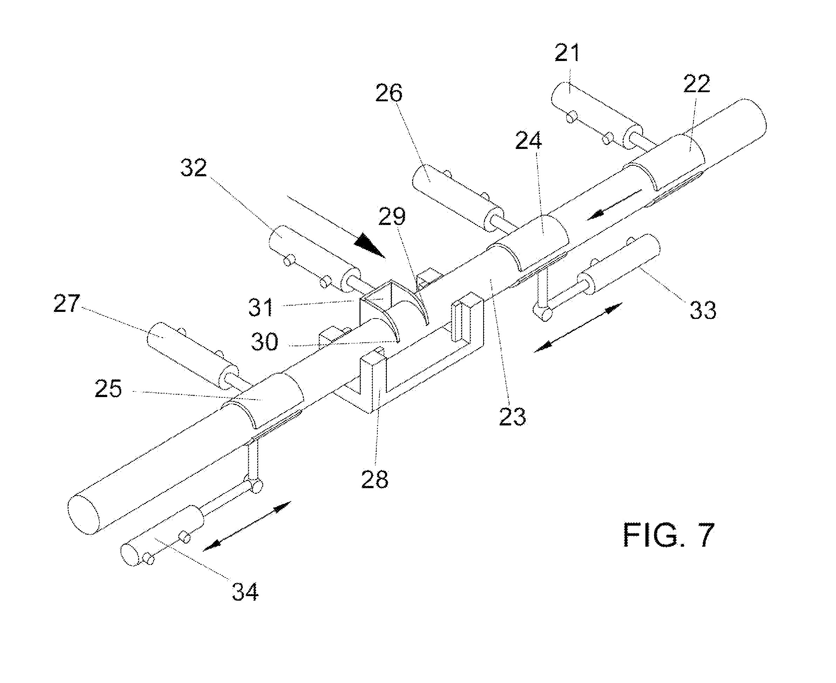

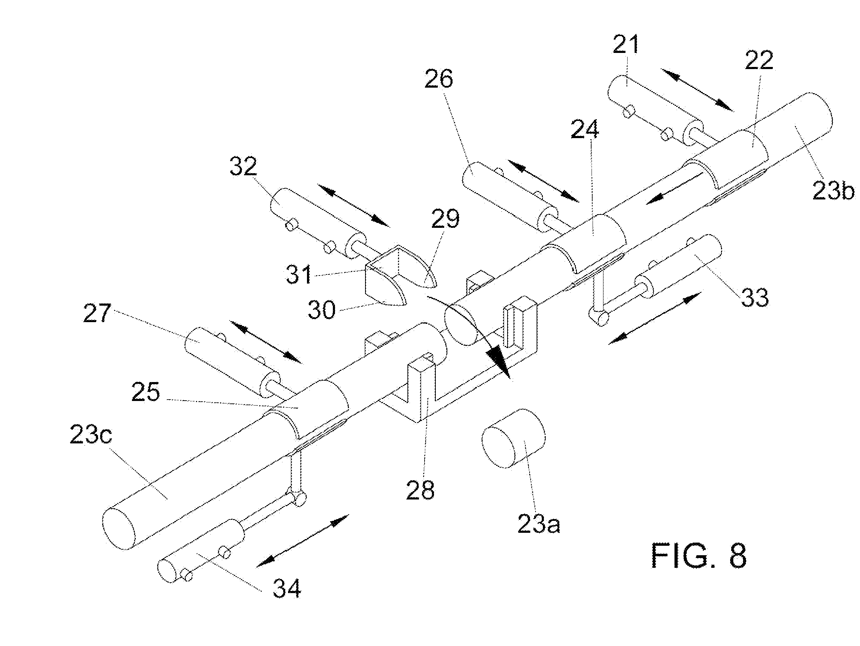

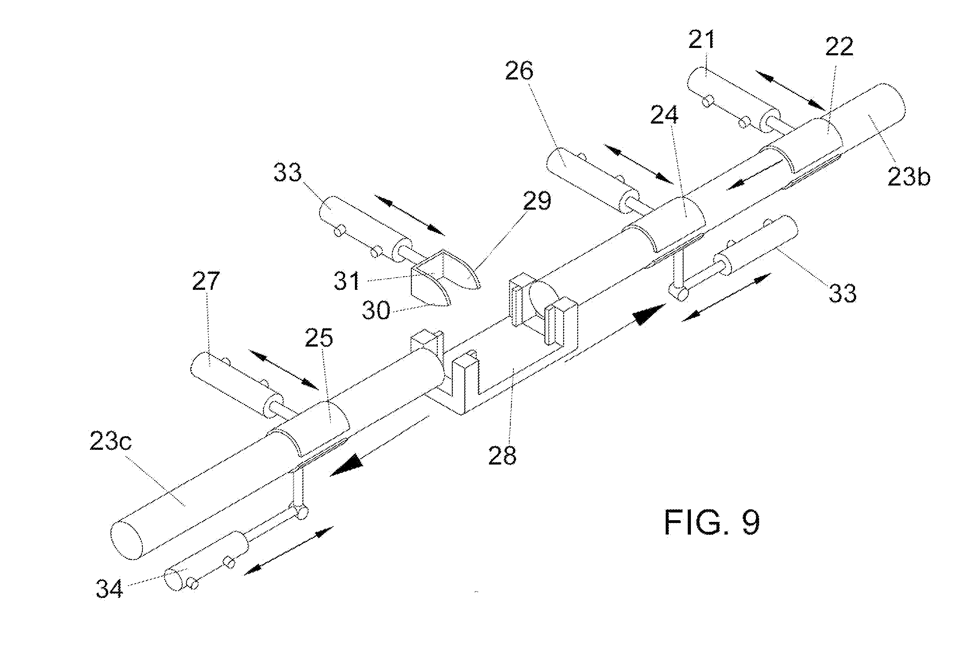

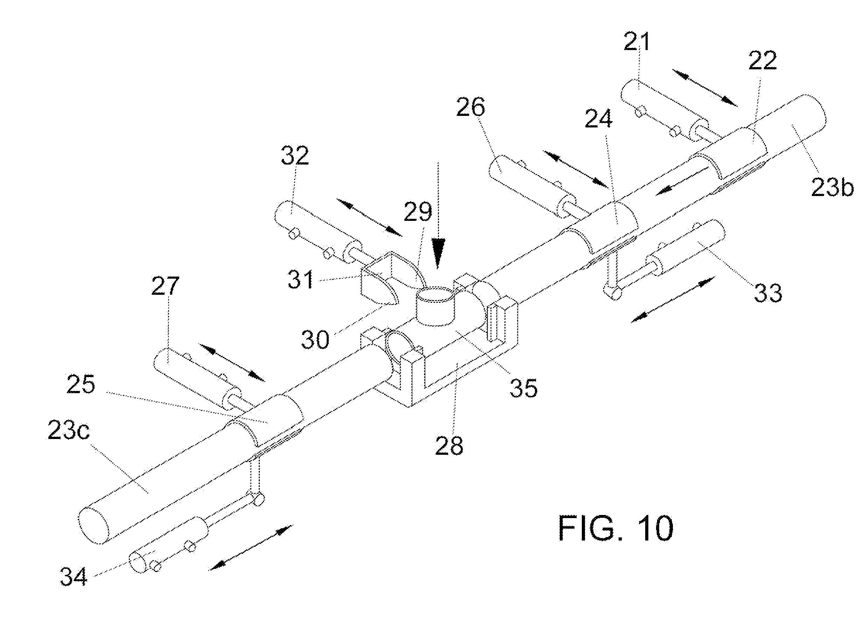

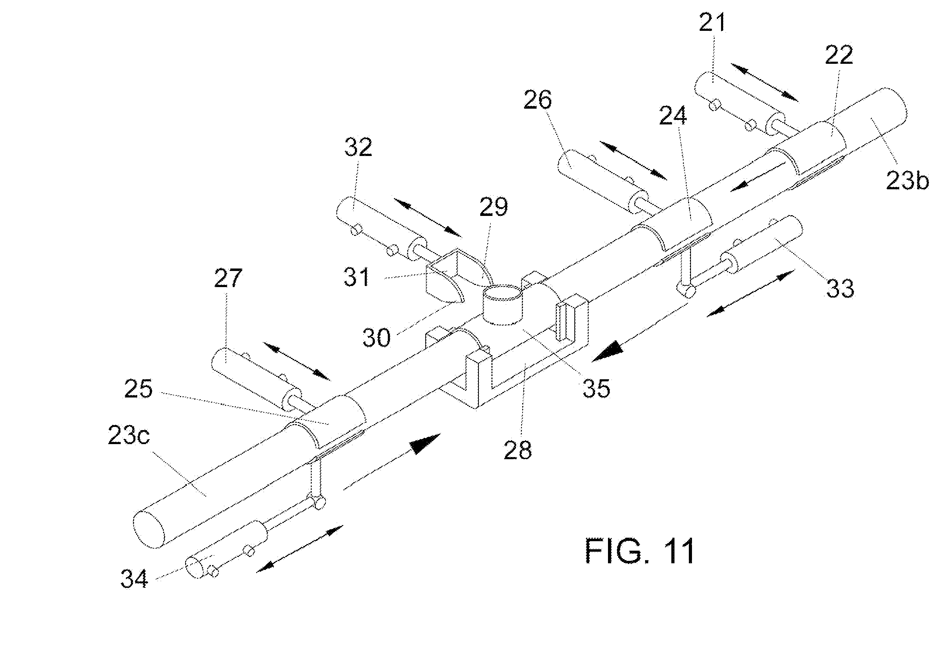

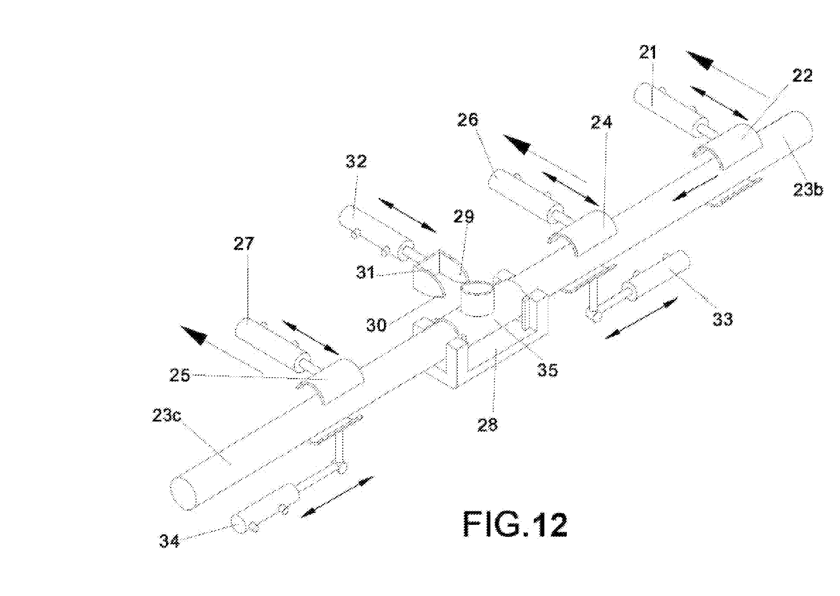

Said machine, the one shown in detail in Figures 6 to 12, comprises a plurality of cylinders, electrically actuated by means of corresponding electrovalves, provided with different actuation elements, the tube being installed in a structure supporting it and making it move forward automatically, the connection process having the following steps:
- By means of an electric command, acting on an electrovalve, a first cylinder (21) is operated, which cylinder incorporates an end clamp (22) which is closed on the polyethylene tube or conduit (23) forming the conduit, and holds it, stopping its forward movement (Figure 6).
- Seconds later, two other lateral clamps (24) and (25) are closed at the same time on the conduit (23), which clamps, operated by corresponding cylinders (26) and (27), are located on both sides of a central support (28) on which respective parallel blades (29) and (30) separated about 25 mm and provided in a head (31) are located, which head is in turn actuated by a fourth central cylinder (32), said blades (29) and (30) making respective transverse and parallel cuts in the section of tube or conduit (23) located on the mentioned central support (28) (Figure 7).
- Then, once the cut is made, the central cylinder (32) is removed and the resulting piece (23a) of cut tube falls, when the cutting cycle ends (Figure 8).
- The following step involves the separation of the conduit segments (23b) and (23c), for which lateral cylinders (33) and (34), joined at the lower part and respectively to the aforementioned lateral clamps (24) and (25) located, as has been stated, on both sides of the support (28), move away from one another until the end of travel thereof, the path of which will have been previously calculated so that the separation between the conduit segments (23b) and (23c) is sufficient to incorporate therebetween the metal part (35) to be connected (Figure 9).
- Once the conduit segments (23b) and (23c) are separated, the metal part (35) to be connected is placed on the support (28) (Figure 10).
- Then, the lateral cylinders (33) and (34) move in an opposite direction, to move the conduit segments (23b) and (23c) closer to one another, which segments are inserted in the ends of the metal part (35) to be connected, being fixed thereto through "gills" provided for such purpose inside the ends thereof (Figure 11).
- Finally, the two clamps (24) and (25) lateral to the support and the end clamp (22) are opened and separated from the conduit (23) by means of the actuation on the corresponding cylinders (26) and (27) and (21) to which they are associated (Figure 12).

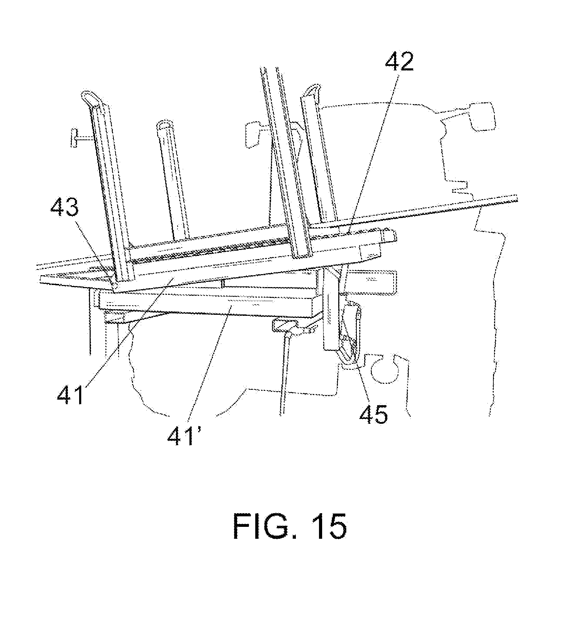

Thus, from this structuring and returning again to Figures 13 to 15, the platform (16) will be provided with means for the fixing to the tractor vehicle (36) in question, being finished at the front part in an arm (37) on which a reel (38) is arranged through the corresponding bearings or bushes in a horizontal arrangement, in which the irrigation conduit (23) or tube to be buried in the ground is wound.

Said conduit (23) will gradually be unwound automatically from the reel (38) to the guide (19), until reaching the connecting machine (20), which will be tended to by an operator, such that said conduit (23) will slide along said machine when it is necessary to perform connections until reaching the rear area of the mentioned longitudinal guide (19) in correspondence with which a second curved guide (39) with a U-shaped section is established, which section allows the sliding through its opening of the branches or connections of the main conduit (23) without the latter being an obstacle for the machine, which second elastic guide (39) will directly feed the apparatus (1) for installing underground irrigation conduits.

As has been mentioned above, a table (40) is established laterally to the platform (16) in the front area of the same, which table is movable with respect to a lowerable frame (41-41') through a plurality of wheels (42) established on its upper surface, which frame forms a sort of dihedron with a hinging pin (43). The table is suitable in shape and size to receive a plurality of connection parts (44) which will be coupled to the main conduit (23) by means of the connecting machine (20), which parts will be taken from said table by the operator when necessary, for which the mentioned lowerable frame (41-41') will have at least one hydraulic cylinder (45) in correspondence with the edge opposite the hinging edge, through which said table can be pivoted, and consequently the content thereof can be made accessible for the operator in question, who will be able to operate comfortably from the platform (16).

In relation to the apparatus (1) for installing underground irrigation conduits, it will incorporate in its upper area a lance (46) which in the working situation will be arranged coplanarly with the platform (16), being able to incorporate thereon a series of plates or boards determining additional platforms, not depicted in the figures for the sake of simplicity. In correspondence with the end of said lance (46) it has been provided that the device incorporates a pair of arms (47) with a Z-shaped configuration, on the ends of which there are established respective notched and rotating disks (48), arranged obliquely, like a wedge, which allow covering the assembly formed by the installed pipe and the furrow itself with the earth extracted from the furrow.

Finally, the fact that a stabilizing element (49) can be inserted in the shaft of the T-shaped connection parts (44) should be emphasized, which element consists of a cubic body, with a through hole which is suitable in size and shape to allow the passage therethrough of said shaft, which element will be gradually inserted by the operator located on the platform in the "Ts" so that once it is implanted in the furrow, it acts like a stabilizing element preventing said elements from being inclined with the dumping of earth on said furrow, since once they are buried, the correct positioning thereof is much more complicated than carrying out this operation.

## Claims

1. Device for installing underground irrigation conduits, of the type which, pulled by a tractor or the like, to which it is coupled by means of hitching means (3), has a spike (4) creating a ditch to which the introduction of the conduit (23) is aimed passing it through a curved channel, **characterized in that** it comprises a metal structure (2) with an approximately quadrangular and planar configuration, which incorporates on one of its sides a chain (5) coupled to a plurality of star bearings (6), like pinions, which enable and guide the movement thereof, a series of articulated flat bars (7) with an L-shaped profile having been provided distributed along said chain (5), which flat bars, in the curved section (8) of the path of the mentioned chain (5), intended for the passage of the conduit (23), and going from the front upper end, through which the conduit (23) enters, to the rear lower end of the structure (2), through which it exits, are lifted pushed by a profile (10) provided in said section (8) for such purpose, such that said flat bars (7), upon being lifted, are laterally supported on the conduit (23), accompanying it in the passage of the latter through the mentioned curved section (8).

2. Device for installing underground irrigation conduits according to claim 1, **characterized by** the fact that, in the final part of the curved section (8) of the chain (5) covered by the conduit (23), at the rear lower end of the structure (2), and through which the conduit (9) exits, there have been provided respective parallel parts (11), partially separated from one another, such that they determine an outlet groove (12) which is curved in its central part, as a result of the protrusion (13) provided in one of said parts (11) located in correspondence with the recess (14) provided in the other one, said outlet groove (12) being intended to channel the vertical sections which can be coupled to the conduit (23).

3. Device for installing underground irrigation conduits according to claims 1 and 2, **characterized by** the fact that the incorporation of a hydraulic cylinder (15) on the spike (4) is contemplated, which cylinder, powered by the tractor itself to which the apparatus (1) is coupled, provide force thereto for its correct introduction in the ground at the desired depth.

4. Process for connecting parts in irrigation conduits, intended to procure cutting a water conduit or the like, particularly a tube conduit of plastic material, for example of polyethylene, for the connection or "embedment" therein of a part, such as a valve, a metal attachment part or another similar part, **characterized by** the fact of comprising the use of a plurality of cylinders, electrically actuated by means of corresponding electrovalves, provided with different actuation elements, the tube being installed in a structure supporting it and making it move forward automatically, the process consisting of the following steps:
- By means of an electric command, acting on an electrovalve, a first cylinder (21), with an end clamp (22) which is closed on the polyethylene conduit (23) and holds, it stopping its forward movement, is operated.
- Seconds later, two other lateral clamps (24) and (25) are closed at the same time on the conduit (23), which clamps, operated by corresponding cylinders (26) and (27), are located on both sides of a central support (28) on which respective parallel blades (29) and (30) separated about 25 mm and provided in a head (31) are located, which head is in turn actuated by a fourth central cylinder (32), said blades (29) and (30) making respective transverse and parallel cuts in the section of conduit (23) located on the mentioned central support (28).
- Once the cut is made, the central cylinder (32) is removed and the resulting piece (23a) of cut conduit or tube falls.
- Then, the tube segments (23b) and (23c) are separated, for which lateral cylinders (33) and (34), joined at the lower part and respectively to the lateral clamps (24) and (25) located on both sides of the support (28), move away from one another until the end of travel thereof, said path having been previously calculated so that the separation between the tube segments (23b) and (23c) is sufficient to incorporate therebetween the metal part (35) to be connected.
- Once the tube segments (23b) and (23c) are separated, the metal part (35) to be connected is placed on the support (28).
- The, the lateral cylinders (33) and (34) move in an opposite direction, to move the tube segments (23b) and (23c) closer to one another, which segments are inserted in the ends of the metal part (35) to be connected, being fixed thereto through "gills" provided for such purpose inside the ends thereof.
- Finally, the two clamps (24) and (25) lateral to the support and the end clamp (22) are opened and separated from the conduit (23) by means of the actuation on the corresponding cylinders (26) and (27) and (21) to which they are associated.

5. Device for installing underground irrigation conduits according to the previous claims, **characterized in that** it additionally incorporates a platform (16), in which there is defined an elongated service passage (17), with dimensions slightly greater than those of the tractor vehicle (36) to which it is fixed, parallel to which platform there is established a longitudinal guide (19) on which the connecting machine (20) for connecting parts in conduits is movable, and which is finished at its rear end in a second flexible guide (39), for feeding the actual apparatus (1) for installing underground irrigation conduits, it having been provided that in correspondence with the front end of the platform there is established an arm (37) on which a reel (38) for supplying the irrigation conduit (23) to be buried in the ground to the connecting machine (20) for connecting parts in conduits is arranged through the corresponding bearings or bushes.

6. Device for installing underground irrigation conduits according to the previous claims, **characterized in that** in the front area of the platform there is established laterally thereto a table emerging from a lowerable frame (41-41') forming a sort of dihedron with its corresponding hinging pin, which table is suitable in shape and size to receive a plurality of connection parts, it having been provided that the mentioned lowerable frame is accompanied by at least one hydraulic cylinder (45) for pivoting the table towards the main platform, said table being movable with respect to the frame through a plurality of wheels (42) established on the upper surface of the latter.

7. Device for installing underground irrigation conduits according to the previous claims, **characterized in that** the flexible guide (39) has a U-shaped section suitable in size and shape to allow the sliding through its opening of the branches or connections of the main tube without the latter being an obstacle for the machine.

8. Device for installing underground irrigation conduits according to the previous claims, **characterized in that** the apparatus (1) for installing underground irrigation conduits incorporates in its upper area a lance (46), in correspondence with the end of which there is established a pair of arms (47) the ends of which are finished in respective notched and rotating disks (48) arranged obliquely, like a wedge.

9. Device for installing underground irrigation conduits according to the previous claims, **characterized in that** the apparatus for installing underground irrigation conduits can incorporate on its upper surface a series of plates or boards determining additional platforms which in the working situation are aligned with the main platform.
